# EUROPÄISCHE PATENTSCHRIFT

(11) **EP 3 844 788 B1**
(45) Veröffentlichungstag und Bekanntmachung des Hinweises auf die Patenterteilung: **06.09.2023**
(21) Anmeldenummer: 19765176.3
(22) Anmeldetag: 14.08.2019
(51) Int. Cl.: H01H 13/18

(54) **BEFESTIGUNGSMITTEL**
FASTENER
MOYEN DE FIXATION

(30) Priorität: 29.08.2018 DE 202018004013 U; 03.12.2018 DE 202018106864 U
(43) Veröffentlichungstag der Anmeldung: 07.07.2021
(73) Patentinhaber: Wheelguard GmbH, 27793 Wildeshausen (DE)
(72) Erfinder: Blin, Jörg, 27793 Wildeshausen (DE)
(74) Vertreter: Jabbusch, Matthias
(86) Internationale Anmeldenummer: PCT/EP2019/071790
(87) Internationale Veröffentlichungsnummer: WO 2020/043491

(56) Entgegenhaltungen:
- EP-A1- 2 803 871
- DE-A1-102010 001 144
- DE-A1-102014 217 076

## Beschreibung

Die Erfindung betrifft ein Befestigungsmittel, insbesondere einer Fahrwerkskomponente, aufweisend wenigstens einen Sensor und wenigstens einen Sender einer Überwachungseinrichtung zur Überwachung wenigstens eines mechanischen Befestigungsparameters, wobei dem Sender wenigstens eine Energieversorgungseinheit zugeordnet ist, wobei der Sender und die Energieversorgungseinheit über einen Schaltkontakt miteinander verbunden sind, wobei über den Schaltkontakt eine elektrische Verbindung schließbar ist, wobei der Schaltkontakt derart ausgebildet ist, wobei die elektrische Verbindung bei bestimmungsgemäß eingebautem Befestigungsmittel geöffnet ist und nur bei gelöstem Befestigungsmittel geschlossen ist, wobei der Sender nur bei geschlossener elektrischer Verbindung des Schaltkontakts mit Strom versorgt ist und ein Signal sendet, wobei dem Schaltkontakt ein Betätigungselement zugeordnet ist, und wobei das Betätigungselement eine Vorspannung aufweist. Weiter betrifft die Erfindung auch eine Vorrichtung zum Überwachen einer mechanischen Befestigung.

Ein solches Befestigungsmittel ist aus der DE 10 2014 217 076 A1 bekannt. Dieses soll sich dazu eignen die Befestigung eines Rades an einer Radaufhängung zu überwachen. Gemäß der DE 10 2014 217 076 A1 ist eine Basiseinheit, die eine Signalverarbeitungseinheit umfasst mit einer Sensoranordnung koppelbar, wobei die Sensoranordnung einem entsprechenden Befestigungsmittel zugeordnet sein soll. Als Sensoranordnung werden dabei unterschiedlichste Sensoren, beispielsweise ein Drucksensor oder ein Lagesensor, genannt, wobei allen Sensoranordnungen in weiterer Ausgestaltung gemein sein soll, dass als Parameter ein momentaner Anpressdruck bzw. das Vorliegen eines Kontaktes zwischen miteinander zu befestigenden Teilen erfasst wird. Die momentane Zustandsüberwachung gemäß der DE 10 2014 217 076 A1 erfordert dabei eine ständige Signalübertragung zwischen der Signalverarbeitungseinheit und der Sensoranordnung, so dass eine dauerhafte Stromversorgung der Sensoranordnung gewährleistet sein muss. Die Sensoreinheit weist dementsprechend eine elektrische Energiequelle auf, die bevorzugt eine Energiegewinnungseinheit sein soll, um eine dauerhafte Energieversorgung und Signalübertragung sicherzustellen.

Weiter ist aus der DE 10 2010 001 144 A1 ein mechanisches Verbindungsbauteil bekannt. Dieses mechanische Verbindungsbauteil weist eine Sensorschicht zum Auslesen beispielsweise eines Anzugsmoments auf. Eine über die Sensorschicht ermittelte Information einer mechanischen Belastung des Verbindungsbauteils wird dabei über eine drahtlose Schnittstelle erfasst und ausgelesen. Dem mechanischen Verbindungsbauteil ist daher ebenso eine entsprechende dauerhafte Energieversorgung zuzuordnen.

Aus der EP 2 803 871 A1 soll ein intelligenter Befestiger zu entnehmen sein, der einen Kopfbereich aufweist, in dem in einer Ausnehmung ein RFID Tag, eine Antenne und ein Sensor angeordnet sind. Weiter weist der Kopfbereich eine Durchbohrung auf, innerhalb der ein Armbereich des Sensors parallel einer Längserstreckung des Befestigers gleitbar angeordnet sein soll. Mit dem Armbereich soll dann ein Mikroschalter des Sensors zwischen zwei Zuständen schaltbar sein, wobei die Zustände wiedergeben, ob der Befestiger fest sitzt oder sich gelöst hat.

Aufgabe der Erfindung ist es ein derartiges Befestigungsmittel dahingehend weiterzuentwickeln, dass die Überwachungseinrichtung möglichst wenig Energie verbraucht und so über einen langen Zeitraum dessen Funktion sichergestellt ist und die Überwachungseinrichtung an unterschiedlich geformte Befestigungsmittel anpassbar bzw. in diese integrierbar ist.

Die Lösung dieser Aufgabe erfolgt mit einem Befestigungsmittel gemäß den Merkmalen des Anspruchs 1 und einer Vorrichtung gemäß den Merkmalen des Anspruchs 11. Weiterbildungen und vorteilhafte Ausgestaltungen sind in den nachgeordneten Ansprüchen angegeben.

Da der Schaltkontakt des Senders bei bestimmungsgemäß eingebautem Befestigungsmittel nicht geschlossen ist und der Sender somit nicht mit Strom versorgt ist, kann der Sender kein Signal aussenden und verbraucht keinen Strom der Energieversorgungseinheit. Der Sender ist dementsprechend deaktiviert. Ein als Energieversorgungseinheit vorgesehener Energiespeicher kann so über einen langen Zeitraum die Energieversorgung des Senders für den Fall sicherstellen, dass sich das Befestigungsmittel löst. Das Befestigungsmittel kann dabei beispielsweise der Befestigung eines Rades an einer Radaufhängung dienen. In dem Fall, sich das Rad von der Radaufhängung löst, wird der Schaltkontakt geschlossen und der Sender sendet ein Signal, insbesondere ein Warnsignal, aus.

Um den Schaltkontakt zu schließen und zu öffnen, ist dem Schaltkontakt ein Betätigungselement zugeordnet sein. Das Betätigungselement weist eine Vorspannung auf, so dass das Betätigungselement in Abhängigkeit von einer Einbauposition des Befestigungsmittels in einer vorbestimmten Lage gehalten ist. Vorteilhafterweise steht das Betätigungselement dabei bei bestimmungsgemäß eingebautem Befestigungsmittel unter Spannung und ist bei gelöstem Befestigungsmittel entspannt.

In weiterer Ausgestaltung ist das Betätigungselement derart gestaltet sein, dass bei Aufbringen einer Kraft gegen die Vorspannung die elektrische Verbindung des Schaltkontakts geöffnet wird. Die Kraft gegen die Vorspannung kann dabei durch einen Druck des zu befestigenden Gegenstandes oder eine Aufnahme bzw. eine Halterung, an der der zu befestigende Gegenstand befestigt werden soll, auf das Betätigungselement bewirkt sein. Bei Nachlassen dieses Druckes entspannt sich dann das Betätigungselement und der elektrische Schaltkontakt wird geschlossen.
Gemäß einer bevorzugten Ausführung ist das Betätigungselement ein federbelasteter Stift, der parallel zu einer Rotationsachse eines Gewindes des Befestigungsmittels verschiebbar ist. Wenn das Befestigungsmittel bei bestimmungsgemäßem Einbau in Richtung der Rotationsachse des Gewindes mit einem korrespondierenden Gewinde verbunden wird, kann auf besonders einfache Weise ein Kontaktabschnitt an der Aufnahme oder Halterung, die das korrespondierende Gewinde aufweisen, ausgebildet sein. Dieser Kontaktabschnitt der Aufnahme oder Halterung drückt dann gegen das als federbelasteter Stift ausgebildete Befestigungselement. Die Aufnahme oder die Halterung können in weiterer Ausgestaltung zum Beispiel ein Radbolzen oder eine Aufnahme einer Radaufhängung bzw. eines Radträgers sein.

Weiter ist das Betätigungselement ein federbelasteter Stift, der zu einer Rotationsachse eines Gewindes des Befestigungsmittels in einem Winkel derart angestellt ist, dass der Stift in Richtung eines Mittenbereichs des Befestigungsmittels verschiebbar ist, insbesondere in Richtung der Rotationsachse verschiebbar ist. Durch eine solche Anordnung ist es möglich, dass der Kontaktabschnitt an der Aufnahme der Halterung auch seitlich zu dem Befestigungsmittel ausgebildet sein kann und auf gleiche Weise beim Eindrehen des Befestigungsmittels eine Betätigung des Schaltkontakts ermöglicht.

Der Schaltkontakt ist bevorzugt durch zwei Enden metallischer Streifen gebildet, wobei der Schaltkontakt bei miteinander verbundenen Enden der metallischen Streifen geschlossen ist. Wenigstens einer dieser metallischen Streifen ist in weiterer Ausgestaltung gebogen ausgebildet und bildet einen einseitigen Hebel aus. Dieser einseitige Hebel ist derart angeordnet, dass der Schaltkontakt aufgrund seiner Eigenspannung in einer Ausgangsstellung geschlossen ist, insbesondere der Hebel des Schaltkontakts aufgrund seiner Eigenspannung in einer Ausgangsstellung den Schaltkontakt schließt. Der Sender ist in dieser Ausgangsstellung dann über die Energieversorgungseinheit mit Strom versorgt.

In weiterer Ausgestaltung sind der Hebel des Schaltkontakts und das Betätigungselement derart zueinander angeordnet, dass das Betätigungselement bei geöffnetem Schaltkontakt gegen den Hebel drückt und diesen gegen seine Eigenspannung auslenkt, insbesondere derart auslenkt, dass der Schaltkontakt geöffnet ist. Sowohl das Betätigungselement als auch der Hebel des Schaltkontakts stehen somit bei geöffnetem Schaltkontakt unter Spannung, insbesondere unter größtmöglicher Spannung. Nach einer Weiterbildung ermöglicht der Sender eine drahtlose Signalübertragung an einen Empfänger. Das Befestigungsmittel muss so nicht direkt mit dem Empfänger verbunden sein und der Sender kann auch dann noch senden, wenn das Befestigungsmittel vollständig gelöst bzw. abgetrennt ist. Geeignete Standards für eine drahtlose Signalübertragung sind beispielsweise Funksignale oder Bluetooth.

Eine besonders vorteilhafte Anordnung der Überwachungseinrichtung in oder an dem Befestigungsmittel ergibt sich, wenn die Überwachungseinrichtung an einem äußeren Kopfende des Befestigungsmittels in diesem verbaut ist. Der Sender ist so auch bei eingebautem bzw. teilweise eingebautem Befestigungsmittel von möglichst wenig Material umgeben, so dass der Sender schon mit einer geringen Signalstärke ein von einem Empfänger empfangbares Signal aussenden kann. Insbesondere auch dann, wenn das Befestigungsmittel nur teilweise gelöst ist und dies durch eine optische Betrachtung nicht ohne weiteres erkennbar wäre.

Weiterhin können nach einer Weiterbildung zumindest der Sender und der Schaltkontakt der Überwachungseinrichtung in einer nach außen abgedichteten Kammer angeordnet sein. Die abgedichtete Kammer gewährleistet einen größtmöglichen Schutz gegen Verschmutzungen, wie Staub, Schmiermittel und Dreck, welche eine ordnungsgemäße Funktion des Schaltkontakts beeinträchtigen können. Zudem ist durch die Anordnung des Senders und des Schaltkontakt in der Kammer ein Schutz gegen von außen einwirkende Kräfte geschaffen, so dass diese Kräfte nicht zu einer Beschädigung der in der Kammer angeordneten Teile führen können. Neben dem Sender und dem Schaltkontakt kann vor allem auch die Energieversorgungseinheit, insbesondere der Energiespeicher, mit in der Kammer angeordnet sein. Um die Energieversorgungseinheit, insbesondere den Energiespeicher, gegebenenfalls austauschen zu können, kann dieser auch in einer weiteren, von außen zugänglichen Kammer angeordnet sein.

Bei allen Ausführungen des Befestigungsmittels mit einer Kammer ist das Betätigungselement vorteilhafterweise immer aus der Kammer herausgeführt, um Druck auf dieses ausüben zu können. Eine für das Betätigungselement vorgesehene Durchführung ist dementsprechend abzudichten, damit gewährleistet ist, dass kein Staub, Schmiermittel oder Dreck in die Kammer eindringen kann.

Da das Befestigungsmittel insbesondere für die Befestigung einer Fahrwerkskomponente und da insbesondere zur Befestigung eines Rades an einer Radaufhängung vorgesehen ist, ist das Befestigungsmittel gemäß einer ersten bevorzugten Ausführung eine Radschraube. Diese Ausführung findet zumeist bei Pkw Verwendung.

Bei einer Ausführung mit Radschraube ist die Überwachungseinrichtung dann vorteilhafterweise derart in diese integriert, dass die Radschraube eine sich in Richtung Rotationsachse ihres Gewindes erstreckende Ausnehmung in dem Gewinde aufweist, in der das Betätigungselement des Schaltkontakts geführt ist. Indem sich die Ausnehmung des Betätigungselements in Richtung der Rotationsachse des Gewindes erstreckt, ergibt sich eine Zwangsführung des Betätigungselements. Beim Eindrehen der Radschraube in das korrespondierende Gewinde einer Radaufhängung wird dann durch einen Kontaktabschnitt der Radaufhängung Druck auf das Betätigungselement ausgeübt, wobei das Betätigungselement in Richtung Kopfende des Befestigungsmittels verschoben wird. Das in Richtung Kopfende des Befestigungsmittels verschobene Betätigungselement unterbricht dann den Schaltkontakt zwischen Energieversorgungseinheit und Sender.

In weiterer Ausgestaltung ist die Ausnehmung dabei an einem kopfseitigen Ende des Gewindes angeordnet, um insbesondere auch geringe Lageveränderungen der Radschraube erfassen zu können. Dabei reicht es, wenn sich die Ausnehmung ausgehend vom kopfseitigen Ende des Gewindes in Richtung eines Einzuschraubenden Endes Gewindes nur über einen Teilbereich des gesamten Gewindes erstreckt.

Weiter kann das Betätigungselement des Schaltkontakts bei einer erfindungsgemäßen Radschraube auch an einer kegel- bis kugelförmigen Kontaktfläche der Radschraube, die zwischen deren Kopf und Gewinde ausgebildet ist, aus dem Inneren der Radschraube nach außen geführt sein. Da die kegel- bis kugelförmige Kontaktfläche in dem Bereich, in dem das Betätigungselement des Schaltkontakts nach außen aus der Radschraube herausgeführt ist, bei bestimmungsgemäßer Verwendung vollflächig an einem Kontaktabschnitt, insbesondere einer Schraubenaufnahme oder einer Felge anliegt, ist auf einfache Weise erreicht, dass das Betätigungselement weniger verschmutzt. Weniger Verschmutzung an dem Betätigungselement verringert dann auch die Wahrscheinlichkeit, dass sich das Betätigungselement aufgrund einer Verschmutzung festsetzt und somit die Verschmutzung zu einer Funktionsbeeinträchtigung führt.

Gemäß einer Ausführung der Erfindung ist das Befestigungsmittel eine Radmutter. Ein solches Befestigungsmittel ist insbesondere geeignet, um Räder an einer Radaufhängung mit Stehbolzen zu befestigen und zu sichern. Verbreitung finden solche Verbindungen vor allem bei Lastkraftwagen und anderen Nutzfahrzeugen.

Die Radmutter kann dann in weiterer Ausgestaltung der Erfindung an einem kopfseitigen Ende ihres Gewindes einen innenliegenden Stirnvorsprung aufweisen, an oder in dem ein Betätigungselement des Schaltkontakts gehalten ist. Analog zu der ersten Ausführung als Radschraube ist das Betätigungselement dabei an oder in dem Stirnvorsprung zwangsgeführt. Die Zwangsführung des Betätigungselements ermöglicht somit eine Bewegung des Betätigungselements parallel einer Rotationsachse des Gewindes der Radmutter.

Der Stirnvorsprung erstreckt sich dabei vorteilhafterweise in einer radialen Ebene zu der Rotationsachse und kann bevorzugt als umlaufender Stirnring oder Stirnplatte ausgebildet sein. Ist der Stirnvorsprung als Stirnplatte ausgebildet, kann die Stirnplatte gleichzeitig die Kammer zu dem Gewinde hin begrenzen, in der der Schaltkontakt angeordnet ist.

Weiter betrifft die Erfindung auch eine Vorrichtung gemäß Anspruch 11.

Über die Meldeeinrichtung erfolgt im Falle eines von einem Sender eines gelösten Befestigungsmittels ausgesendeten Signals eine entsprechende Verarbeitung und Aufbereitung des Signals. Die Bearbeitung und Aufbereitung umfasst dabei das Empfangen und Prüfen eines entsprechenden Signals, welches bevorzugt drahtlos von dem Sender zu dem Empfänger übermittelt wird. Ergibt die Prüfung des Signals in der Datenverarbeitungseinheit, dass sich ein Befestigungsmittel aus seiner bestimmungsgemäßen Einbauposition gelöst hat, wird von der Datenverarbeitungseinheit eine entsprechende Information an die Ausgabeeinheit übermittelt.

Gemäß einer Weiterbildung der Vorrichtung weist die Ausgabeeinheit Mittel auf, mit denen eine direkte Ausgabe einer Warnung oder eine Weiterleitung einer entsprechenden Information über einen Zustand des mechanischen Verbindungsparameters möglich ist. Eine Warnung über einen Zustand des mechanischen Verbindungsparameters oder des Befestigungsmittels kann dann über wenigstens eine der nachfolgenden Optionen: Push-Nachricht, E-Mail, SMS, Online-Register, akustische Warnung oder optische Warnung erfolgen, wobei die aufgeführten Optionen nicht abschließend sind. Eine Weiterleitung von Informationen erfolgt dabei bevorzugt bei einer Warnung mittels Push-Nachricht, E-Mail, SMS oder Online-Register, wobei die Weiterleitung dann bevorzugt über Mobilfunknetze oder bekannte Standards für mobiles Internet erfolgt. Auch können verschiedene Optionen von Warnungen miteinander kombiniert werden, um sicherzustellen, dass eine entsprechende Warnung möglichst schnell wahrgenommen wird.

Werden Fahrwerkskomponenten eines Fahrzeugs überwacht, zum Beispiel die Verbindung von Rad und Radaufhängung, ist die Meldeeinrichtung vorteilhafterweise direkt in das Fahrzeug eingebaut, wobei unter Umständen eine oder mehrere bereits vorhandene Datenverarbeitungseinheiten des Fahrzeugs genutzt werden können. Bei Neufahrzeugen sind dann entsprechend nur noch eine Ausgabeeinheit mit beispielsweise einer Warnleuchte und/oder einer akustischen Warneinrichtung sowie ein entsprechender Empfänger vorzusehen. Die Ausgabeeinheit ist dann vorteilhafterweise vollständig in ein Fahrzeug integriert.

Für die Nachrüstung in einem bestehenden Fahrzeug empfiehlt sich nach einer Weiterbildung der Vorrichtung der Einbau einer kompletten, in sich geschlossenen Meldeeinrichtung, insbesondere solch eine Meldeeinrichtung, welche eine Information über die Ausgabeeinheit weiterleitet oder ein akustisches Signal aussendet, um die Meldeeinrichtung in einem Motorraum oder unter einer Verkleidung eines Fahrzeuginsassenraums anordnen zu können.

Um sicherzustellen, dass die drahtlose Übertragung nicht von Fremdsignalen gestört wird, kann nach einer Weiterbildung zudem vorgesehen sein, dass die drahtlose Signalübertragung verschlüsselt erfolgt. Dies erleichtert das Erkennen eines entsprechenden Signals des Senders des Befestigungsmittels durch den Empfänger der Meldeeinrichtung.

Sowohl das als Radmutter ausgebildete Befestigungsmittel als auch das als Radschraube ausgebildete Befestigungsmittel eignet sich zudem als Diebstahlschutz, wobei dann eine Meldung generiert wird, die von der Ausgabeeinheit weitergeleitet wird. Damit kann ein Besitzer auch dann informiert werden, wenn dieser nicht in der Nähe des Fahrzeugs ist. Der Besitzer kann dann entsprechende Schritte einleiten, beispielsweise die Polizei verständigen. Entgegen der Funktion, bei der die sichere Befestigung einer Fahrwerkskomponente, beispielsweise einem Rad an einer Radaufhängung, überwacht wird und bei der alle Befestigungsmittel der Fahrwerkskomponente eine entsprechende Überwachungseinrichtung aufweisen müssen, reicht für die Funktion des Diebstahlschutzes ein einziges Befestigungsmittel je Rad und Radaufhängung aus.

Ein Ausführungsbeispiel der Erfindung, aus dem sich weitere erfindungswesentliche Merkmale ergeben können, ist in der Zeichnung dargestellt. Es zeigen:
- Figur 1:: eine erste perspektivische Ansicht einer ersten Ausführung eines Befestigungsmittels nicht gemäß der Erfindung;
- Figur 2:: eine geschnittene Darstellung des Befestigungsmittels gemäß Figur 1;
- Figur 3:: eine perspektivische Verständnisskizze des Befestigungsmittels gemäß Figur 1 und Figur 2 mit sämtlichen Körperkanten;
- Figur 4:: eine zweite perspektivische Ansicht der ersten Ausführung des Befestigungsmittels nicht gemäß der Erfindung;
- Figur 5:: eine geschnittene Darstellung des Befestigungsmittels gemäß Figur 4;
- Figur 6:: eine perspektivische Verständnisskizze des Befestigungsmittels gemäß Figur 4 und Figur 5 mit sämtlichen Körperkanten;
- Figur 7:: eine perspektivische Darstellung einer zweiten Ausführung eines Befestigungsmittels nicht gemäß der Erfindung;
- Figur 8:: eine geschnittene Darstellung des Befestigungsmittels gemäß Figur 7;
- Figur 9:: einen Querschnitt durch das Befestigungsmittel gemäß Figur 7 und Figur 8; und
- Figur 10:: eine geschnittene Darstellung einer Ausführung eines erfindungsgemäßen Befestigungsmittels.

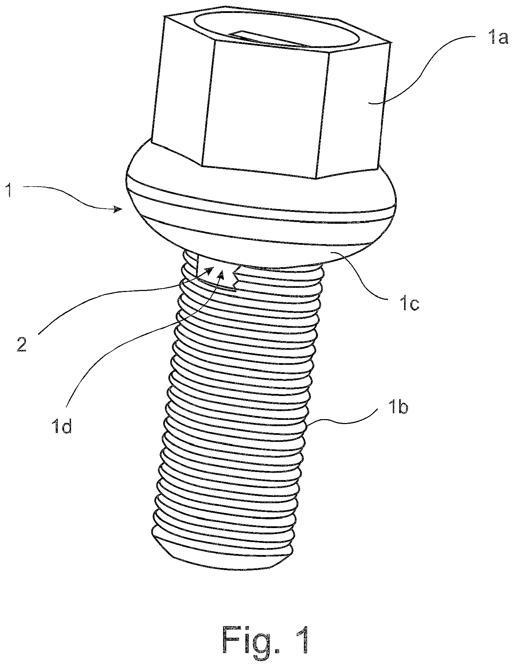

In Figur 1 ist ein Befestigungsmittel in der Ausführung als Radschraube 1 dargestellt. Diese Radschraube 1 weist einen in Sechskantform ausgebildeten Kopf 1a auf. Zwischen dem Kopf 1a und einem Gewinde 1b der Radschraube 1 ist eine kegel- bis kugelförmige Kontaktfläche 1c vorgesehen, die zum Gewinde 1b hin zulaufend ausgebildet ist. In einem Grenzbereich zwischen der kegel- bis kugelförmigen Kontaktfläche 1c und dem Gewinde 1b weist das Gewinde 1b eine sich in Richtung Rotationsachse des Gewindes 1b erstreckende Ausnehmung 1d auf, in der ein Betätigungselement 2 geführt ist.

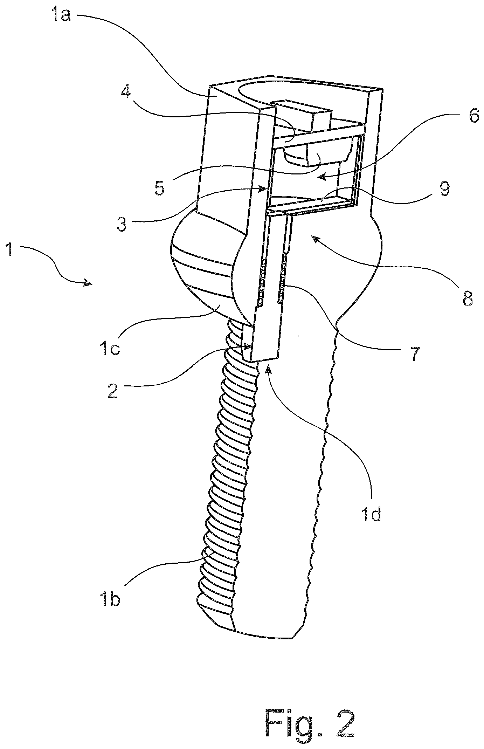

In Figur 2 ist die Radschraube 1 geschnitten dargestellt, wobei gleiche Teile wie in den übrigen Zeichnungen mit gleichen Bezugszeichen versehen sind. Aus Figur 1 nicht ersichtlich ist dabei, dass im Innern des Kopfes 1a der Radschraube 1 ein Schaltkontakt 3, ein Sender 4 und eine Energieversorgungseinheit 5 angeordnet sind. Der Sender 4 verschließt dabei eine Kammer 6 im Kopf 1a der Radschraube 1. In der Kammer sind der Schaltkontakt 3 und die Energieversorgungseinheit 5 angeordnet.

Weiter ist in Figur 2 zu erkennen, dass das Betätigungselement 2 federbelastet in der Radschraube 1 gehalten ist, wobei ein dem Betätigungselement 2 zugeordnetes Federelement 7 maximal ausgelenkt ist, so dass das Betätigungselement 2 nicht gespannt ist. Das Betätigungselement 2, das Federelement 7, der Schaltkontakt 3 und die Energieversorgungseinheit 5 bilden dabei zusammen einen Sensor 8 aus, der zusammen mit dem Sender 4 eine erfindungsgemäße Überwachungseinrichtung bildet.

Der Schaltkontakt 3 ist in Figur 2 geschlossen, so dass der Sender 4 und die Energieversorgungseinheit 5 über den Schaltkontakt 3 elektrisch miteinander verbunden sind. Der Sender 4 wird daher in Figur 1 und Figur 2 von der Energieversorgungseinheit 5 mit Strom versorgt und sendet ein Signal aus.

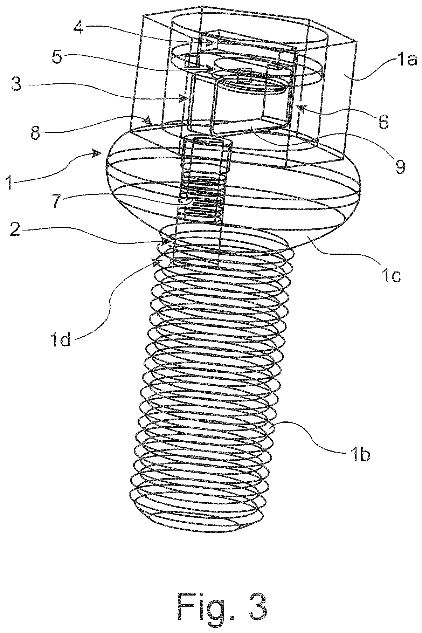

Figur 3 zeigt die gleiche Anordnung noch einmal mit sämtlichen dargestellten Körperkanten der Radschraube 1.

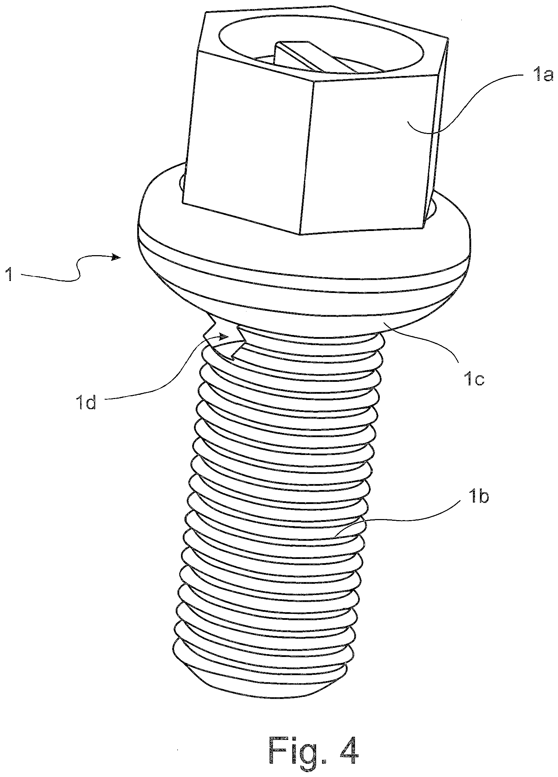

Die Darstellungen gemäß Figur 4 bis Figur 6 unterscheiden sich von derjenigen in Figur 1 bis Figur 3 dadurch, dass die Radschraube 1 in der Form dargestellt ist, wenn die Radschraube 1 bestimmungsgemäß eingebaut ist. Das Betätigungselement 2 ist dabei in die Radschraube 1 eingedrückt, so dass in Figur 4 nur die Ausnehmung 1d, in der das Betätigungselement 2 geführt ist, sichtbar ist.

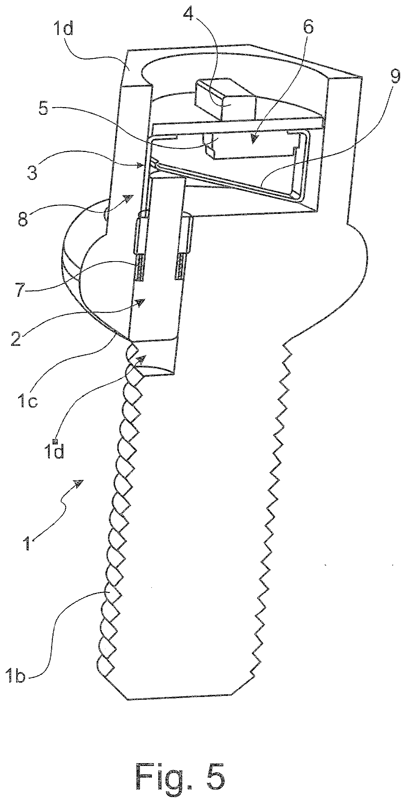

Die Position des Betätigungselements 2 bei bestimmungsgemäß eingebauter Radschraube 1 wird insbesondere aus Figur 5 ersichtlich, wobei das Federelement 7 maximal gestaucht ist. Das Betätigungselement 2 ragt jetzt in die Kammer 6 hinein und drückt gegen den Schaltkontakt 3, wobei ein einseitiger, metallischer Hebel 9 des Schaltkontakts 3 durch das Betätigungselement 2 derart verschwenkt ist, dass die elektrische Verbindung zwischen der Energieversorgungseinheit 5 und dem Sender 4 unterbrochen ist. Der jetzt stromlose Sender 4 sendet damit keine Signale mehr aus und es wird keine Energie der vorzugsweise als Energiespeicher ausgebildeten Energieversorgungseinheit 5 durch den Sender 4 benötigt solange die Radschraube 1 in ihrer bestimmungsgemäßen Position eingebaut ist.

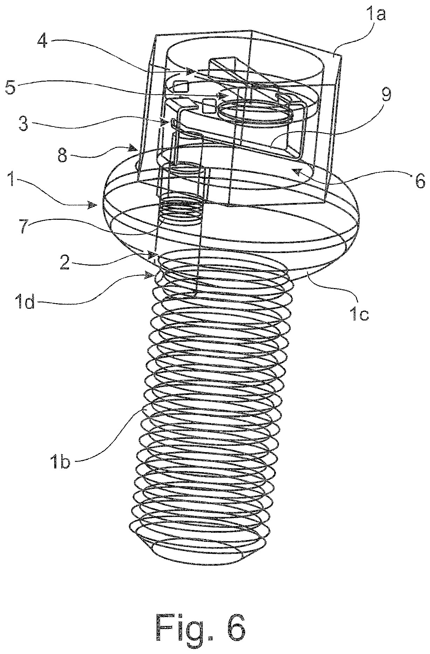

Figur 6 zeigt noch einmal die gleiche Anordnung mit unterbrochenem Schaltkontakt 3 und stromlosen Sender 4 wie Figur 4 und Figur 5, wobei sämtliche Körperkanten der Radschraube 1 dargestellt sind.

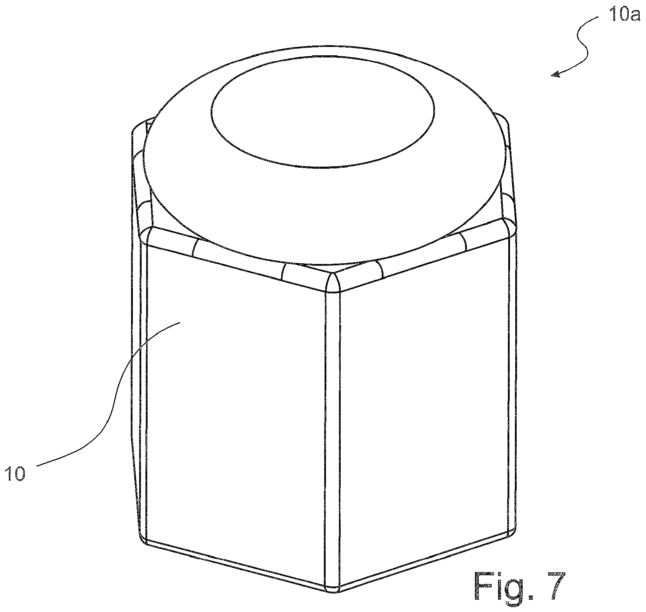

Eine zweite Ausführung nicht gemäß der Erfindung ist in Figur 7 bis Figur 9 dargestellt. Entgegen der ersten Ausführung ist das Befestigungsmittel jetzt als Radmutter 10 ausgebildet. Die Radmutter 10 weist dabei wiederum einen Kopf 10a mit seitlichen Sechskantflächen auf. An ihrem kopfseitigen Ende ist die Radmutter 10 kuppelförmig ausgebildet.

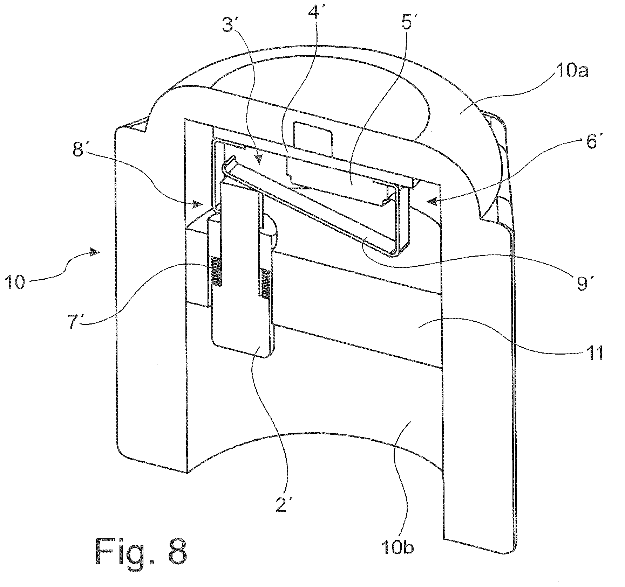

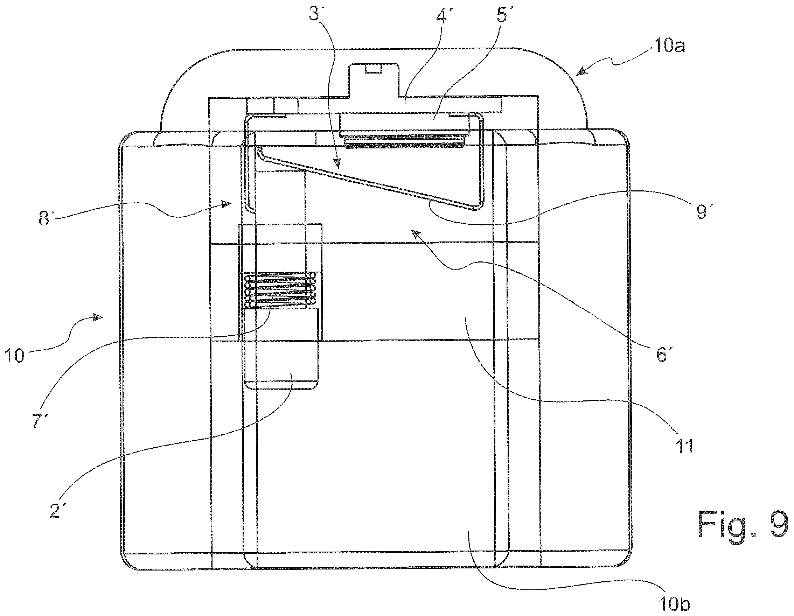

Aus Figur 8 und Figur 9 ist eine im Inneren der Radmutter 10 ausgebildete Kammer 6' ersichtlich, in der ein Sender 4', ein Schaltkontakt 3', eine Energieversorgungseinheit 5' und ein mit einem Federelement 7' federbelastetes Betätigungselement 2' angeordnet sind, die wie schon in Figur 1 bis 6 zusammen die Überwachungseinrichtung aus Sender 4' und Sensor 8' ausbilden. Die Darstellung in Figur 8 und Figur 9 entspricht dabei derjenigen von Figur 4 bis Figur 6 und zeigt die Radmutter 10 in aufgeschraubtem Zustand. Das Betätigungselement 2` drückt dabei in gleicher Weise wie in Figur 4 bis Figur 6 gegen den Schaltkontakt 3', so dass der Sender 4' stromlos ist und keine Signale sendet. Solange der Sender 4' stromlos ist wird wiederum keine Energie der Energieversorgungseinheit 5' verbraucht.

Wesentlicher Unterschied ist dabei, dass das Betätigungselement 2' in einem hier als Stirnplatte 11 ausgebildeten Stirnvorsprung angeordnet ist. Die Stirnplatte 11 verschließt dabei die Kammer 6' zu einem kopfseitigen Ende eines Gewindes 10b der Radmutter 10. In ihrer Funktionsweise sind die beiden Ausführungen gleichwirkend.

Wird die Radmutter 10 jetzt von einem nicht dargestellten Radbolzen gelöst, wird das Betätigungselement 2' von dem Federelement 7' in Richtung Innengewinde der Radmutter 10 und damit aus der Kammer 6' herausgedrückt. Sobald das Betätigungselement 2' nicht mehr gegen den Schaltkontakt 3', insbesondere den einseitigen, metallischen Hebel 9' des Schaltkontakts 3', drückt, wird dieser aufgrund seiner Eigenspannung in Richtung der Stirnplatte 11 gedrückt und der Schaltkontakt 3' mit seinen beiden Enden geschlossen.

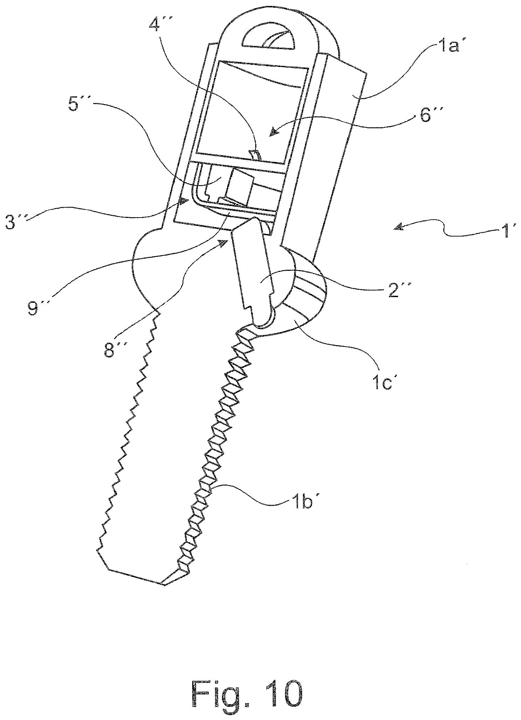

Das Befestigungsmittel in Figur 10 ist wiederum eine Radschraube 1'. Die Radschraube 1' ist größtenteils gleich der Radschraube 1 aus Figur 1 bis Figur 6. Für gleiche Teile wurden entsprechend Bezugszeichen mit gleichen Nummern vergeben. Wesentlicher Unterschied zu der Radschraube 1 gemäß Figur 1 bis Figur 6 ist ein geändert angeordnetes Betätigungselement 2", welches in einem Winkel zu der Rotationsachse der Radschraube 1' verschiebbar ist und an der kegel- bis kugelförmigen Kontaktfläche 1c' aus dem Inneren der Radschraube 1' herausgeführt ist. Mit Vorteil entfällt daher die Ausnehmung 1b' der Radschraube 1. Alle weiteren Merkmale sind übereinstimmend zu der Radschraube 1 gemäß Figur 1 bis Figur 6.

## Patentansprüche

1. Befestigungsmittel, insbesondere einer Fahrwerkskomponente, aufweisend wenigstens einen Sensor (8, 8', 8") und wenigstens einen Sender (4, 4', 4") einer Überwachungseinrichtung zur Überwachung wenigstens eines mechanischen Befestigungsparameters, wobei dem Sender (4, 4', 4") wenigstens eine Energieversorgungseinheit (5, 5', 5") zugeordnet ist, wobei der Sender (4, 4', 4") und die Energieversorgungseinheit (5, 5', 5") über einen Schaltkontakt (3, 3', 3") miteinander verbunden sind, wobei über den Schaltkontakt (3, 3', 3") eine elektrische Verbindung schließbar ist, wobei der Schaltkontakt (3, 3', 3") derart ausgebildet ist, wobei die elektrische Verbindung bei bestimmungsgemäß eingebautem Befestigungsmittel geöffnet ist und nur bei gelöstem Befestigungsmittel geschlossen ist, wobei der Sender (4, 4', 4") nur bei geschlossener elektrischer Verbindung des Schaltkontakts (3, 3', 3") mit Strom versorgt ist und ein Signal sendet,
wobei dem Schaltkontakt (3, 3', 3") ein Betätigungselement (2, 2', 2") zugeordnet ist,
wobei das Betätigungselement (2, 2', 2") eine Vorspannung aufweist, und
wobei das Betätigungselement (2, 2', 2") derart gestaltet ist, dass bei Aufbringen einer Kraft gegen die Vorspannung die elektrische Verbindung des Schaltkontakts (3, 3', 3") geöffnet wird,
**dadurch gekennzeichnet,**
**dass** das Betätigungselement (2") ein federbelasteter Stift ist, der zu einer Rotationsachse eines Gewindes (1b') des Befestigungsmittels (1') in einem Winkel derart angestellt ist, dass der Stift in Richtung der Rotationsachse verschiebbar ist.

2. Befestigungsmittel nach Anspruch 1, **dadurch gekennzeichnet, dass** der Schaltkontakt (3, 3', 3") durch wenigstens zwei Enden metallischer Streifen gebildet ist, wobei wenigstens einer der Streifen gebogen ist und durch seine Eigenspannung den Schaltkontakt (3, 3', 3") schließt.

3. Befestigungsmittel nach einem der Ansprüche 1 oder 2, **dadurch gekennzeichnet, dass** der Sender (4, 4', 4") eine drahtlose Signalübertragung ermöglicht.

4. Befestigungsmittel nach einem der Ansprüche 1 bis 3, **dadurch gekennzeichnet, dass** die Überwachungseinrichtung an einem äußeren Kopfende des Befestigungsmittels in diesem verbaut ist.

5. Befestigungsmittel nach einem der Ansprüche 1 bis 4, **dadurch gekennzeichnet, dass** zumindest der Sender (4, 4', 4") und der Schaltkontakt (3, 3', 3") der Überwachungseinrichtung in einer nach außen abgedichteten Kammer (6, 6', 6") angeordnet sind.

6. Befestigungsmittel nach einem der Ansprüche 1 bis 5, **dadurch gekennzeichnet, dass** das Befestigungsmittel eine Radschraube (1, 1') ist.

7. Befestigungsmittel nach Anspruch 6, **dadurch gekennzeichnet, dass** die Radschraube (1) eine sich in Richtung Rotationsachse ihres Gewindes (1b) erstreckende Ausnehmung (1d) in dem Gewinde (1b) aufweist, in der ein Betätigungselement (2) des Schaltkontakts (3) geführt ist.

8. Befestigungsmittel nach Anspruch 6, **dadurch gekennzeichnet, dass** das Betätigungselement (2") des Schaltkontakts (3") an einer kegel- bis kugelförmigen Kontaktfläche (1c`) der Radschraube (1'), die zwischen deren Kopf (1a') und Gewinde (1b') ausgebildet ist, aus dem Inneren der Radschraube (1') nach Außen geführt ist.

9. Befestigungsmittel nach einem der Ansprüche 1 bis 5, **dadurch gekennzeichnet, dass** das Befestigungsmittel eine Radmutter (10) ist.

10. Befestigungsmittel nach Anspruch 9, **dadurch gekennzeichnet, dass** die Radmutter (10) an einem kopfseitigen Ende (10a) ihres Gewindes (10b) einen innenliegenden Stirnvorsprung aufweist, an oder in dem ein Betätigungselement (2') des Schaltkontakts (3') gehalten ist.

11. Vorrichtung zum Überwachen einer mechanischen Befestigung, insbesondere einer Fahrwerkskomponente, mit wenigstens einer Überwachungseinrichtung, die wenigstens einen Sensor (8, 8', 8") und wenigstens einen Sender (4, 4', 4") aufweist, und einer Meldeeinrichtung, die einen dem Sender (4, 4', 4") der Überwachungseinrichtung zugeordneten Empfänger, eine Datenverarbeitungseinheit und eine Ausgabeeinheit aufweist, wobei die Überwachungseinrichtung ein Befestigungsmittel nach einem der Ansprüche 1 bis 10 aufweist.

12. Vorrichtung nach Anspruch 11, **dadurch gekennzeichnet, dass** die Ausgabeeinheit Mittel aufweist, mit denen eine direkte Ausgabe einer Warnung oder eine Weiterleitung einer entsprechenden Information über einen Zustand des mechanischen Verbindungsparameters möglich ist.

13. Vorrichtung nach einem der Ansprüche 11 oder 12, **dadurch gekennzeichnet, dass** die Ausgabeeinheit in ein Fahrzeug integriert ist.

## Claims

1. Fastening means, in particular a chassis component, comprising at least one sensor (8, 8', 8") and at least one transmitter (4, 4', 4") of a monitoring device for monitoring at least one mechanical fastening parameter, wherein at least one power supply unit (5, 5', 5") is assigned to the transmitter (4, 4', 4"), wherein the transmitter (4, 4', 4") and the power supply unit (5, 5', 5") are connected to each other via a switching contact (3, 3', 3"), wherein an electrical connection can be closed via the switching contact (3, 3', 3"), wherein the switching contact (3, 3', 3") is designed in such a way, wherein the electrical connection is open when the fastening means is installed as intended and is closed only when the fastening means is detached, wherein the transmitter (4, 4', 4") is only supplied with power and transmits a signal when the electrical connection of the switching contact (3, 3', 3") is closed,
wherein an actuating element (2, 2', 2") is assigned to the switching contact (3, 3', 3").
wherein the actuating element (2, 2', 2") comprises a preload; and
wherein the actuating element (2, 2', 2") is designed in such a way that, when a force is applied against the preload, the electrical connection of the switching contact (3, 3', 3") is opened,
**characterized in that**
the actuating element (2") is a spring-loaded pin positioned at an angle to an rotational axis of a thread (1b') of the fastening means (1') in such a way that the pin can be moved in the direction of the rotational axis.

2. Fastening means according to Claim 1, **characterized in that** the switching contact (3, 3', 3") is formed by at least two ends of metallic strips, wherein at least one of the strips is bent and closes the switching contact (3, 3', 3") via its inherent stress.

3. Fastening means according to any one of the Claims 1 or 2, **characterized in that** the transmitter (4, 4', 4") enables wireless signal transmission.

4. Fastening means according to any one of the Claims 1 to 3, **characterized in that** the monitoring device is installed on an outer end of the fastening means in it.

5. Fastening means according to any one of the Claims 1 to 4, **characterized in that** at least the transmitter (4, 4', 4") and the switching contact (3, 3', 3") of the monitoring device are arranged in a chamber (6, 6', 6") that is sealed off from the exterior.

6. Fastening means according to any one of the Claims 1 to 5, **characterized in that** the fastening means is a wheel bolt (1, 1').

7. Fastening means according to Claim 6, **characterized in that** the wheel bolt (1) comprises a recess (1d) in the thread (1b) extending in the direction of the rotational axis of its thread (1b), in which an actuating element (2) of the switching contact (3) is guided.

8. Fastening means according to Claim 6, **characterized in that** the actuating element (2") of the switching contact (3") is guided outwardly from the inside of the wheel bolt (1') on a conical to spherical contact surface (1c') of the wheel bolt (1'), which is formed between its head (1a') and thread (1b').

9. Fastening means according to any one of the Claims 1 to 5, **characterized in that** the fastening means is a wheel nut (10).

10. Fastening means according to Claim 9, **characterized in that** the wheel nut (10) comprises an internal end projection at one end (10a) of its thread (10b) on or in which an actuating element (2') of the switching contact (3') is held.

11. Device for monitoring a mechanical attachment, in particular, a chassis component, with at least one monitoring device comprising at least one sensor (8, 8', 8") and at least one transmitter (4, 4', 4") and a signalling device comprising a receiver assigned to the transmitter (4, 4', 4") of the monitoring device, a data processing unit and an output unit, wherein the monitoring device has fastening means according to any one of the Claims 1 to 10.

12. Device according to Claim 11, **characterized in that** the output unit comprises means by which a direct output of a warning or a transmission of corresponding information about a status of the mechanical connection parameter is possible.

13. Device according to any one of the Claims 11 or 12, **characterized in that** the output unit is integrated into a vehicle.

## Revendications

1. Moyen de fixation, notamment d'un composant de châssis, comportant au moins un capteur (8, 8', 8") et au moins un émetteur (4, 4', 4") d'un dispositif de supervision destiné à superviser au moins un paramètre de fixation mécanique, à l'émetteur (4, 4', 4") étant associée au moins une unité d'alimentation (5, 5', 5") en énergie, l'émetteur (4, 4', 4") et l'unité d'alimentation (5, 5', 5") en énergie étant connectés l'un à l'autre par l'intermédiaire d'un contact de commutation (3, 3', 3"), par l'intermédiaire du contact de commutation (3, 3', 3") pouvant être fermée une connexion électrique, le contact de commutation (3, 3', 3") étant conçu de telle sorte que lorsque le moyen de fixation est monté de manière conforme, la connexion électrique soit ouverte et ne soit fermée que lorsque le moyen de fixation est désolidarisé, l'émetteur (4, 4', 4") n'étant alimenté en courant électrique et n'émettant un signal que lorsque la connexion électrique du contact de commutation (3, 3', 3") est fermée,
au contact de commutation (3, 3', 3") étant associé un élément d'actionnement (2, 2', 2"),
l'élément d'actionnement (2, 2', 2") étant sous précontrainte ; et
l'élément d'actionnement (2, 2', 2") étant conçu de telle sorte que lors de l'application d'une force à l'encontre de la précontrainte, la connexion électrique du contact de commutation (3, 3', 3") s'ouvre,
**caractérisé en ce que**
l'élément d'actionnement (2") est une tige contrainte par ressort, qui est en prise sous un angle par rapport à un axe de rotation d'un filetage (1b') du moyen de fixation (1'), de telle sorte que la tige soit déplaçable dans la direction de l'axe de rotation.

2. Moyen de fixation selon la revendication 1, **caractérisé en ce que** le contact de commutation (3, 3', 3") est constitué d'au moins deux extrémités de rubans métalliques, au moins l'un des rubans étant recourbé et fermant par sa contrainte propre le contact de commutation (3, 3', 3").

3. Moyen de fixation selon l'une quelconque des revendications 1 ou 2, **caractérisé en ce que** l'émetteur (4, 4', 4") permet une transmission de signaux sans fil.

4. Moyen de fixation selon l'une quelconque des revendications 1 à 3, **caractérisé en ce que** le dispositif de supervision est monté dans le moyen de fixation sur une extrémité de tête extérieure de celui-ci.

5. Moyen de fixation selon l'une quelconque des revendications 1 à 4, **caractérisé en ce qu'**au moins l'émetteur (4, 4', 4") et le contact de commutation (3, 3', 3") du dispositif de supervision sont placés dans un compartiment (6, 5', 6") étanchéifié vers l'extérieur.

6. Moyen de fixation selon l'une quelconque des revendications 1 à 5, **caractérisé en ce que** le moyen de fixation est un boulon de roue (1, 1').

7. Moyen de fixation selon la revendication 6, **caractérisé en ce que** le boulon de roue (1) comporte dans le filetage (1b) un évidement (1d) qui s'étend dans la direction de l'axe de rotation de son filetage (1b), dans lequel est guidé un élément d'actionnement (2) du contact de commutation (3).

8. Moyen de fixation selon la revendication 6, **caractérisé en ce que** l'élément d'actionnement (2") du contact de commutation (3") est guidé vers l'extérieur à partir de l'intérieur du boulon de roue (1'), sur une surface de contact (1c') de forme conique ou sphérique du boulon de roue (1'), qui est conçue entre la tête (1a') et le filetage (1b') de celui-ci.

9. Moyen de fixation selon l'une quelconque des revendications 1 à 5, **caractérisé en ce que** le moyen de fixation est un écrou de roue (10).

10. Moyen de fixation selon la revendication 9, **caractérisé en ce que** l'écrou de roue (10) présente sur une extrémité (10a) côté tête de son filetage (10b) une saillie frontale interne, sur ou dans laquelle est maintenu un élément d'actionnement (2') du contact de commutation (3').

11. Dispositif, destiné à superviser une fixation mécanique, notamment d'un composant de châssis, pourvu d'au moins un dispositif de supervision, qui comporte au moins un capteur (8, 8', 8") et au moins un émetteur (4, 4', 4") et d'un système de signalisation, qui comporte un récepteur associé à l'émetteur (4, 4', 4") du dispositif de supervision, une unité de traitement de données et une unité de sortie, le dispositif de supervision comportant un moyen de fixation selon l'une quelconque des revendications 1 à 10.

12. Dispositif selon la revendication 11, **caractérisé en ce que** l'unité de sortie comporte des moyens à l'aide desquels une délivrance directe d'une alerte ou une retransmission d'une information correspondante concernant un état du paramètre de liaison mécanique est possible.

13. Dispositif selon l'une quelconque des revendications 11 ou 12, **caractérisé en ce que** l'unité de sortie est intégrée dans le véhicule.
